# EUROPÄISCHE PATENTANMELDUNG

(11) **EP 4 596 507 A1**
(43) Veröffentlichungstag der Anmeldung: **06.08.2025**
(21) Anmeldenummer: 25151632.4
(22) Anmeldetag: 14.01.2025
(51) Int. Cl.: C03C 3/089, C03C 3/091, C03C 4/20

(54) **VERWENDUNG EINER SCHEIBE ALS SCHUTZSCHEIBE**

(30) Priorität: 30.01.2024 DE 102024102568
(71) Anmelder: SCHOTT Technical Glass Solutions GmbH, 07745 Jena (DE)
(72) Erfinder: ZACHAU, Thilo, 07745 Jena (DE); BRANDT-SLOWIK, Juliane, 07745 Jena (DE)
(74) Vertreter: Schott Corporate IP

(57) **Zusammenfassung**

Die Erfindung betrifft die Verwendung einer Scheibe aus Borosilicatglas als Schutzscheibe, insbesondere als äußereSchutzscheibe, eines Fahrzeugs.

## Beschreibung

Die vorliegende Erfindung betrifft die Verwendung einer Scheibe als Schutzscheibe, insbesondere als äußere Schutzscheibe, eines Fahrzeugs, wobei die Scheibe Borosilicatglas umfasst oder aus Borosilicatglas besteht.

Ein wichtiger Aspekt bei der Benutzung und damit auch schon bei der Herstellung von Fahrzeugen ist ihre Kraftstoffeffizienz. Ein wichtiges Element zur Verbesserung dieser Effizienz ist das Konzept des Leichtbaus. Manchmal werden bekannte kostengünstige Werkstoffe durch neue Werkstoffe ersetzt, die zwar zunächst teurer sind, aber aufgrund ihres geringeren Gewichts und der damit verbundenen höheren Kraftstoffeffizienz eine bessere Nutzbarkeit aufweisen als die ersetzten Werkstoffe. So ist es bekannt, nicht nur das Massenprodukt Kalk-Natron-Glas, sondern auch das Spezialglas Borosilicatglas für die Verglasung von Fahrzeugen zu verwenden.

Die Außenverglasung eines Fahrzeugs, insbesondere seine Windschutzscheibe, muss ausreichend widerstandsfähig sein, um den durch die Windlast verursachten Belastungen standzuhalten. Vor allem der Trend zu immer größeren Windschutzscheiben macht eine noch höhere Festigkeit erforderlich. Auch daher hat sich Borosilicatglas gegenüber Kalk-Natron-Glas bewährt.

Borosilicatglas ist eine Glasart, die Boroxid enthält. Es hat einen niedrigen Wärmeausdehnungskoeffizienten und eine hohe Beständigkeit gegen Chemikalien, vor allem eine hohe Säure- und Wasserbeständigkeit. Es wird häufig zur Herstellung von Glühbirnen, Laborglas und Kochgeschirr verwendet.

Heute sind Windschutzscheiben als Verbunde mit einer Außenscheibe von 2,1 mm bis 8 mm, einer Innenscheibe von 0,6 mm bis 4 mm und einer Kunststoffzwischenschicht von ca. 0,3 bis 1,25 mm weit verbreitet.

Die Anforderungen an die chemische Beständigkeit der äußeren Schutzscheiben eines Fahrzeugs sind, um die Verkehrssicherheit zu gewährleisten, sehr hoch. Sie sind je nach Breitengrad und Jahreszeit verschiedensten Witterungen über einen großen Temperaturbereich mit unterschiedlicher Luftfeuchtigkeit bis zu Nebel und verschiedenen Niederschlagsarten wie Regen, Hagel, Schnee ausgesetzt. Sie sind außerdem verschiedensten sonstigen Umwelteinflüssen wie saurem Regen und Vogelkot ausgesetzt.

Zeigen sich aufgrund dieser Einflüsse Abnutzungserscheinungen auf der Scheibe, führt dies zu verschlechterter Sicht bis hin zur Notwendigkeit des Austauschs der Scheibe, was Kosten aufgrund des Materialverbrauchs, des Arbeitsaufwands, aber auch der Ausfallzeit verursacht.

Es ist daher Aufgabe der Erfindung, diese Situation zu verbessern.

Dies gelingt mit der Verwendung einer Scheibe als Schutzscheibe, insbesondere als äußere Schutzscheibe, eines Fahrzeugs, wobei die Scheibe Borosilicatglas umfasst oder aus Borosilicatglas besteht und eine Wasserbeständigkeit nach DIN ISO 719/720 der Klasse 1 und eine Säurebeständigkeit nach DIN 12116:2001-03 der Klasse 1 aufweist und den Vogelkot-Simulationstest besteht.

So werden die erwähnten Abnutzungserscheinungen reduziert, Insbesondere werden Ausmuschelungen oder Verfärbungen (sog. Staining), die aufgrund von chemisch-physikalischem Angriff durch Glaskorrosion oder Rissbildung als Folge von Stein- oder Hagelschlag, Niederschlagsbestandteilen, Vogelkot, Insekten und deren Hämolymphe, Pilze und Flechten auftreten, oder Anhaftungen, die an mit dem bloßen Auge nicht sichtbaren Oberflächenveränderungen geschehen, reduziert.

Unter "Bestehen des Vogelkot-Simulationstests" wird hier gemäß der Offenbarung verstanden, dass nach Durchführung Vogelkot-Simulationstests mit Einwirkung mit zehn Zyklen von Belichtung und Dunkelzeit bei zweihundertfacher Vergrößerung keine mikroskopisch sichtbare Aufrauhung der Glasoberfläche, also keine Glaskorrosion, sichtbar ist und keine Beläge verbleiben.

Unter dem Vogelkot-Simulationstest wird folgender Test verstanden:
Eine Mischung aus feinpulverisierter 16,8 g Harnsäure ((7,9-Dihydro-1H-purine-2,6,8(3H)-trione; CAS-No. 69-93-2) wird mit isotonischer Kochsalzlösung (9g/l NaCl in Wasser) zu pastöser Konsistenz angemischt. Der Paste werden 5 g getrockneter und sterilisierter natürlicher Taubenkot, und zwar mindestens zehn Tage alte Ausscheidung von Columba livia f. domestica, beigemischt. Jeweils 0,3 cm³ dieser Paste wird auf die zu testende Platte aufgetragen und zwar so, dass die Kontaktfläche einen Kreis von ca. 2 cm Durchmesser einnimmt. Nach eintägiger Lufttrocknung bei Raumtemperatur und 60 % relativer Luftfeuchtigkeit werden die präparierten Platten einer UV-/Temperatur-Einwirkung unterzogen.

Die beschriebene Einwirkung lehnt sich an die Umweltverträglichkeitsprüfung MIL810G an (in Anlehnung an Methode 505.5, Prozedur 2 (steady state test (4.4.3): 8 h ca. 2000 W/m², +49 °C + 16 h 0 W/m², RT). Die UV-/TemperaturEinwirkung wird in Zyklen durchgeführt. Ein Zyklus besteht aus 8 Stunden Belichtung, mit 340-380 nm Schwarzlicht (OSRAM HQV, 125 W) durchgeführt, gefolgt von 16 Dunkelstunden, beides bei Temperaturen zwischen 20 °C und 50 °C.

In jedem Zyklus wird nach Ausschalten der Belichtung für die folgenden Dunkelstunden der Fleck mit 0,1 ml destillierten Wasser wiederbefeuchtet.

Nach einer Standard-Reinigung mit einem handelsüblichen Glasreiniger auf tensidhaltig wässrig-ethanolischer Basis und einem handelsüblichen Zellstofftuch wird die Probe unter dem Mikroskop untersucht.

Der Vogelkottest simuliert, wie eine nicht abgereinigte Verschmutzung unter mehrtägiger Sonnenbestrahlung und nächtlicher Wiederbefeuchtung durch Tau auf eine Fahrzeugscheibe einwirkt. Die als Bestehenskriterium dienende Zyklenzahl berücksichtigt den durchaus vorkommenden Fall, dass z.B. Niederschlag erst nach mehreren Tagen für einen natürlichen Reinigungseffekt sorgt. Die im natürlichen Vogelkot enthaltenen Faser- und Schleimstoffe werden durch die Beimischung von Taubenkot zum Harnsäure-/Wassergemisch erreicht, die die Harnsäure als wesentlichem glaskorrosiv wirkendem Hauptbestandteil der Verschmutzung bindet und eine Haftvermittlung zur Glasscheibe bewirkt. Der hohe Anteil Harnsäure in der Versuchskot-Mischung simuliert die aggressiven Ausscheidungen von z.B. Seevögeln.

Der Begriff Fahrzeug wird unabhängig vom Medium, in dem es sich bewegt, verstanden.

Unter einem Fahrzeug wird insbesondere ein Landfahrzeug, insbesondere ein straßengebundenes Fahrzeug wie vorzugsweise ein Last- oder Personenkraftfahrzeug unabhängig vom Antrieb, vorzugsweise mit Elektro- oder Hybridantrieb, oder ein Schienenfahrzeug wie vorzugsweise ein Eisen- oder Straßenbahnwagen verstanden.

Die Schutzscheibe kann insbesondere eine Windschutz-, Seiten-, Rück- oder Dachscheibe darstellen.

Sie kann der jeweiligen Anwendung entsprechend unterschiedliche Formate, z.B. zwischen 1500 mm² × 800 mm² oder 2500 mm² × 1500 mm² oder auch insbesondere für Panoramadächer von mehr als 2500 mm² × 3000 mm² aufweisen.

Vorzugsweise weist sie eine Dicke zwischen 0,5 mm und 7,5 mm, bevorzugt eine Dicke zwischen 1 mm und 4 mm, besonders bevorzugt eine Dicke zwischen 1,75 mm und 3 mm auf.

Die Scheibe wird erfindungsgemäß als Schutzscheibe verwendet, da sie den Raum, den das Fahrzeug umfasst, vor äußeren Einflüssen schützt.

Vorzugsweise wird sie als äußere Schutzscheibe verwendet. In diesen Fall gibt es neben ihr eine oder mehrere weitere Scheiben, vorzugsweise Glasscheiben, die dem Raum, den das Fahrzeug umfasst, näher ist bzw. sind. Die äußere Schutzscheibe ist dabei dem Raum, der das Fahrzeug umfasst, am nächsten.

Meist ist ein solcher Scheibenverbund als Laminat mit einer oder mehreren, vorzugsweise polymeren, Zwischenschichten ausgebildet.

Vorzugsweise wird eine Scheibe verwendet, die nicht nur eine Säurebeständigkeit nach DIN 12116:2001-03 der Klasse 1 aufweist, sondern deren Auslaugung innerhalb der Klasse 1 höchstens 0,35 mg/dm², bevorzugt höchstens 0,325 mg/dm², besonders bevorzugt höchstens 0,275 mg/dm² beträgt, die also eine besonders hohe Säurebeständigkeit aufweist.

Vorzugsweise wird eine Scheibe verwendet, die nicht nur eine Wasserbeständigkeit nach DIN ISO 719/720 der Klasse 1 aufweist, sondern deren Auslaugung innerhalb der Klasse 1 höchstens 5 µg/g Na₂O, bevorzugt höchstens 4,5 µg/g Na₂O beträgt, die also eine besonders hohe Wasserbeständigkeit aufweist.

Vorzugsweise wird eine Scheibe verwendet, die ein Flächengewicht (d1) von weniger als 2,25 kg/m², bevorzugt höchstens 2,23 kg/m², aufweist.

Als Flächengewicht wird das Verhältnis von Masse und Fläche einer Schicht oder einer Platte bezeichnet. Die SI-Einheit des Flächengewichts ist kg/m². Der Wert ist also nicht auf eine bestimmte Dicke normiert, sondern wird nur normiert auf die Fläche unabhängig von der Dicke für einen Quadratmeter des jeweiligen Gegenstands angegeben. Diese Angabe ist gängig bei dünnen Produkten wie Papier oder Pappe. Mit der Angabe des Flächengewichts werden also Produkte verglichen, die sehr ähnliche Dicken haben.

Bei Glasscheiben, deren Dicken über einen großen Bereich schwanken können, ist eine solche Angabe nicht hilfreich. Selbst innerhalb eines Anwendungsbereichs wie z.B. Architekturverglasungen oder Automobilverglasungen werden Gläser mit sehr unterschiedlichen Dicken eingesetzt.

Deswegen wird in dieser Offenbarung ein "Flächengewicht (dx)" für eine angegebene Dicke d = x mm verwendet.

Das geschilderte geringe Flächengewicht ist für Scheiben von Fahrzeugen von besonderer Bedeutung, da der Energieaufwand, der zu ihrer Bewegung nötig ist, gewichtsabhängig ist.

Das geschilderte geringe Flächengewicht ist insbesondere bei großen Verglasungen von Bedeutung, da dann die Gewichtseinsparung im Vergleich zu Scheiben mit höheren Flächengewichten besonders zum Tragen kommt.

Das geschilderte geringe Flächengewicht wirkt sich besonders vorteilhaft aus, wenn in einem Scheibenverbund mehr als eine dieser Scheiben mit niedrigem Flächengewicht vorhanden sind.

Vorzugsweise wird eine Scheibe verwendet, die einen Ausdehnungskoeffizienten CTE20-300 zwischen 2,5 × 10⁻⁶/K und 5,5 × 10⁻⁶/K, bevorzugt zwischen 2,7 × 10⁻⁶/K und 5,2 × 10⁻⁶/K besonders bevorzugt zwischen 3,0 × 10⁻⁶/K und 5,0 × 10⁻⁶/K, ganz besonders bevorzugt (3,3 ± 0,1) × 10⁻⁶/K besitzt.

Vorzugsweise wird eine Scheibe verwendet, die in Gew.-% auf Oxidbasis
SiO₂ 70 - 87
B₂O₃ 7 - 25
Na₂O + K₂O 0,5 - 9
Al₂O₃ 0 - 7
CaO 0 - 3
MgO 0 - 2
oder
SiO₂ 70 - 86
Al₂O₃ 0 - 5
B₂O₃ 9,0 - 25
Na₂O 0,5 - 5,0
K₂O 0 - 1,0
Li₂0 0 - 1,0
oder
SiO₂ 78,3 - 81,0
B₂O₃ 9,0 - 13,0
Al₂O₃ 3,5 - 5,3
Na₂O 3,5 - 6,5
K₂O 0 - 2,0
CaO 0 - 2,0
umfasst.

Eine Glasscheibe, wie sie hier gemäß der Offenbarung verwendet wird, kann hergestellt werden in einem Verfahren zur Herstellung einer Glasscheibe, insbesondere einem Verfahren zur kontinuierlichen Herstellung einer Glasscheibe umfassend die Schritte
- Bereitstellen eines Gemenges umfassend Glasrohstoffe,
- Schmelzen des Gemenges unter Erhalt einer Glasschmelze,
- Einstellen der Viskosität der Glasschmelze,
- Überführen der Glasschmelze in eine Vorrichtung zum Heißformen, insbesondere mittels Ziehen, vorzugsweise Floaten,
- Heißformen des Glases, insbesondere Ziehen, vorzugsweise Floaten, unter Bildung eines Glasbandes
- Vereinzeln des heißgeformten Glasbandes unter Erhalt einer Glasscheibe.

Floatverfahren sind im allgemeinen dadurch gekennzeichnet, dass eine Glasschmelze auf eine Metallschmelze gegeben, zu einem Glasband ausgezogen und abgekühlt wird. Als Metallschmelze wird meist eine Zinnschmelze verwendet. Um eine Oxidation des flüssigen Zinns zu vermeiden, wird das Floatbad in einer reduzierenden Schutzgasatmosphäre, vorzugsweise einem Formiergasgemisch aus N₂ mit H₂ betrieben. Dabei herrscht in dem Floatbad ein geringer Überdruck, um das Eindringen von Luft und damit Sauerstoff zu vermeiden. Im Floatbad liegt damit eine nahezu O₂-freie Atmosphäre vor.

Mit einem Floatverfahren hergestellte Glasscheiben weisen daher zwei unterscheidbare Seiten auf: eine erste Seite (die "Zinnseite"), die mit dem Metallbad in Kontakt war, und eine zweite Seite (die "Atmosphärenseite"), die mit der Formiergas-Atmosphäre in Kontakt war.

Mit einem Floatverfahren hergestellte Glasscheiben lassen sich von mit anderen Ziehverfahren hergestellten Glasscheiben zum Beispiel dadurch unterscheiden, dass geringe Rückstände des Zinns auf der Floatbadseite der Scheibe in einer sehr dünnen Oberflächenschicht verbleiben.

Handelt es sich beim Heißformgebungsverfahren um ein Floatverfahren, wird vorzugsweise im Bereich hinter der Heißformgebung, beispielsweise in der Dross-Box und/oder im Kühlofen, eine O₂-haltige Atmosphäre bereitgestellt und durch Zuführung eines SO₂-haltigen Gasstromes erreicht, dass an einer oder mehreren Stellen die Atmosphäre an der Oberseite eine höhere SO₂-Konzentration als an der Zinnbadseite des Glasbandes aufweist. Ein solches Verfahren ist aus DE 10 2014 203 564 A1 bekannt, wurde aber bisher nicht für Borosilicatgläser verwendet.

Die Erfindung wird anhand von Beispielen weiter erläutert:
Ein Set von mindestens 20 Scheiben aus Borosilicatglas gemäß der Offenbarung wurde dem Vogelkot-Simulationstest unterzogen:
Eine Mischung aus feinpulverisierter 16,8 g Harnsäure ((7,9-Dihydro-1H-purine-2,6,8(3H)-trione; CAS-No. 69-93-2) wurde mit isotonischer Kochsalzlösung (9g/l NaCl in Wasser) zu pastöser Konsistenz angemischt. Der Paste werden 5 g getrockneter und sterilisierter natürlicher Taubenkot, und zwar mindestens 10 Tage alte Ausscheidung von Columba livia f. domestica, beigemischt. Jeweils 0,3 cm³ dieser Paste wurden auf die zu testenden Scheiben zur einen Hälfte auf deren Zinnseite und zur anderen Hälfte auf deren Atmosphärenseite aufgetragen, und zwar so, dass die Kontaktfläche einen Kreis von ca. 2 cm Durchmesser einnahm. Nach eintägiger Lufttrocknung bei Raumtemperatur und 60 % relativer Luftfeuchtigkeit wurden die präparierten Platten einer UV-/Temperatur-Einwirkung unterzogen. Diese fand in Zyklen statt.

Nach jedem Zyklus der UV-/Temperatur-Einwirkung, der aus 8 Stunden Belichtung, mit OSRAM HQV 125W durchgeführt, gefolgt von 16 Dunkelstunden, beides bei Raumtemperatur, besteht und bei dem jeweils nach Ausschalten der Belichtung für die folgenden Dunkelstunden der Fleck mit 0,1 ml destillierten Wasser wiederbefeuchtet wird, wurden eine Scheibe mit Probe auf der Zinnseite und eine Scheibe mit Probe auf der Atmosphärenseite einer Standard-Reinigung mit einem handelsüblichen Glasreiniger und einem handelsüblichen Zellstofftuch unterzogen und unter dem Mikroskop mit zweihundertfacher Vergrößerung untersucht. Die so gereinigten und untersuchten Scheiben nahmen an weiteren Zyklen nicht mehr teil.

Sowohl die auf der Zinnseite getesteten Borosilicatglas-Scheiben, als auch die auf der Atmosphärenseite getesteten, zeigten auch nach zehn Zyklen von Belichtung und Dunkelzeit keine mikroskopisch bei zweihundertfacher Vergrößerung sichtbare Aufrauhung der Glasoberfläche, also keine Glaskorrosion, und es waren keine Beläge verblieben.

Dass die gemäß dieser Erfindung verwendete Scheibe eine solche hohe Beständigkeit im Vogelkot-Simulationstest zeigt, ist umso überraschender, als der Test nicht nur hohe Anforderungen an die Beständigkeit gegenüber Wasser und Säuren stellt, sondern aufgrund seiner Bestrahlungsbedingungen darüber hinausgeht und als beispielsweise die Laugenbeständigkeit bei Silicatgläsern, so auch bei üblichen Borosilicatgläsern, stets schwächer ausgeprägt ist.

Damit ist sie als Schutzscheibe, insbesondere als äußere Schutzscheibe, eines Fahrzeugs, hervorragend geeignet.

Der Vogelkot-Simulationstest unter den oben geschilderten Bedingungen wurde auch mit Scheiben aus Kalk-Natron-Glas durchgeführt:
Schon nach fünf Zyklen traten sowohl bei den auf der Atmosphärenseite als auch bei den auf der Zinnseite getesteten Kalk-Natron-Glas-Scheiben innerhalb der Kontaktfläche mehr als fünf sogenannter Staining Points je 0,05 mm² auf.

Von Staining Points spricht man ab einem Durchmesser von zwei µm eines solchen nicht abreinigbaren punktförmigen Angriffs auf die Glasoberfläche.

Neben dem Vogelkot-Simulationstest wurde ein Vogelkottest ohne Harnsäure durchgeführt. Hierbei wurden gefloatete Borosilicatglas-Scheiben und gefloatete Kalk-Natron-Glas-Scheiben verwendet:
Es wurden 5 g getrockneter und sterilisierter natürlicher Taubenkot, und zwar mindestens zehn Tage alte Ausscheidung von Columba livia f. domestica, mit 5 ml destilliertem Wasser aufgenommen. Jeweils 0,3 cm³ dieser Paste wurden auf die zu testenden Scheiben aufgetragen, und zwar so, dass die Kontaktfläche einen Kreis von ca. 2 cm Durchmesser einnahm.

Nach eintägiger Lufttrocknung bei Raumtemperatur und 60 % relativer Luftfeuchtigkeit wurden die präparierten Platten einer UV-/Temperatur-Einwirkung unterzogen. Diese fand in Zyklen, wie beim Vogelkot-Simulationstest, statt Nach jedem Zyklus wurden je eine Scheibe Borosilicatglas und eine Scheibe Kalk-Natron-Glas mit Probe auf der Zinnseite und je eine Scheibe Borosilicatglas und eine Scheibe Kalk-Natron-Glas mit Probe auf der Atmosphärenseite einer Standard-Reinigung mit einem handelsüblichen Glasreiniger und einem handelsüblichen Zellstofftuch unterzogen und unter dem Mikroskop mit zweihundertfacher Vergrößerung untersucht. Die so gereinigten und untersuchten Scheiben nahmen an weiteren Zyklen nicht mehr teil.

Nach zwei Zyklen traten bei den auf der Zinnseite getesteten Kalk-Natron-Glas-Scheiben innerhalb der Kontaktfläche mehr als zehn sogenannter Staining Points je 1 mm² auf.

Von Staining Points spricht man ab einem Durchmesser von zwei µm eines solchen nicht abreinigbaren punktförmigen Angriffs auf die Glasoberfläche.

Auf der Atmosphärenseite der Kalk-Natron-Scheiben traten fünf Staining Points je 1 mm² auf.

Bei den getesteten Boroslicatgläser waren nach diesen zwei Zyklen weder auf der Zinnseite, noch auf der Atmosphärenseite Angriffe auf die Glasoberfläche sichtbar.

Die Unterscheidung im Test zwischen Zinn- und Atmosphärenseite und deren unterschiedlichen Ergebnisse sind insofern relevant, als bei Floatglasscheiben, die als Fahrzeugscheiben verwendet werden, vorzugsweise die Atmosphärenseite als innere Seite (sog. 2. Seite), die beispielsweise bedruckt wird, und die Zinnseite als Außenseite (sog. 1. Seite) verwendet wird, für letztere also Beständigkeit gegen Verschmutzungen wie Vogelkot von besonderer Bedeutung ist.

Es ist also eine besonders bevorzugte Ausführungsform, dass die Verwendung gemäß der Offenbarung derart umgesetzt wird, dass die gefloatete Borosilicatglasscheibe in der Einbausituation im Fahrzeug derart angeordnet ist, dass die Seite, die bei ihrer Heißformgebung dem Metallbad zugewandt war, nach außen gerichtet ist.

## Patentansprüche

1. Verwendung einer Scheibe als Schutzscheibe, insbesondere als äußere Schutzscheibe, eines Fahrzeugs,
wobei die Scheibe Borosilicatglas umfasst oder aus Borosilicatglas besteht
und eine Wasserbeständigkeit nach DIN ISO 719/720 der Klasse 1
und eine Säurebeständigkeit nach DIN 12116:2001-03 der Klasse 1 aufweist
und den Vogelkot-Simulationstest besteht.

2. Verwendung einer Scheibe gemäß Anspruch 1,
wobei innerhalb der Klasse 1 der Säurebeständigkeit nach DIN 12116:2001-03 die Auslaugung höchstens 0,35 mg/dm², bevorzugt höchstens 0,325 mg/dm²,
besonders bevorzugt höchstens 0,275 mg/dm² beträgt und/oder
wobei innerhalb der Klasse 1 der Wasserbeständigkeit nach DIN ISO 719/720 die Auslaugung höchstens 5 µg/g Na₂O, bevorzugt höchstens 4,5 µg/g Na₂O beträgt.

3. Verwendung einer Scheibe gemäß Anspruch 1 oder 2,
wobei die Scheibe eine Dicke zwischen 0,5 mm und 7,5 mm, bevorzugt eine Dicke zwischen 1 mm und 4 mm, besonders bevorzugt eine Dicke zwischen 1,75 mm und 3 mm aufweist,
einen Ausdehnungskoeffizienten CTE20-300 zwischen 2,5 × 10⁻⁶/K und 5,2 × 10-⁶/K; bevorzugt zwischen 2,7 × 10⁻⁶/K und 5,2 × 10⁻⁶/K, besonders bevorzugt zwischen 3,0 × 10⁻⁶/K und 5,0 × 10⁻⁶/K, ganz besonders bevorzugt (3,3 ± 0,1) × 10⁻⁶/K besitzt und ein Flächengewicht (d1) von weniger als 2,25 kg/m², bevorzugt höchstens 2,23 kg/m², aufweist.

4. Verwendung einer Scheibe gemäß einem der Ansprüche 1 bis 3, **dadurch gekennzeichnet, dass** sie in Gew.-% auf Oxidbasis
SiO₂ 70 - 87
B₂O₃ 7 - 25
Na₂O + K₂O 0,5 - 9
Al₂O₃ 0 - 7
CaO 0 - 3
MgO 0 - 2
oder
SiO₂ 70 - 86
Al₂O₃ 0 - 5
B₂O₃ 9,0 - 25
Na₂O 0,5 - 5,0
K₂O 0 - 1,0
Li₂O 0 - 1,0
oder
SiO₂ 78,3 - 81,0
B₂O₃ 9,0 - 13,0
Al₂O₃ 3,5 - 5,3
Na₂O 3,5 - 6,5
K₂O 0 - 2,0
CaO 0 - 2,0
umfasst.

5. Verwendung einer Scheibe gemäß einem der Ansprüche 1 bis 4, **dadurch gekennzeichnet, dass** bei ihrer Herstellung als Heißformgebungsschritt ein Ziehverfahren, vorzugsweise ein Floatverfahren, eingesetzt wurde.

6. Verwendung einer Scheibe nach wenigstens einem der Ansprüche 1 bis 5, **dadurch gekennzeichnet, dass** das Fahrzeug ein Landfahrzeug, insbesondere ein straßengebundenes Fahrzeug wie vorzugsweise ein Last- oder Personenkraftfahrzeug unabhängig vom Antrieb, vorzugsweise mit Elektro- oder Hybridantrieb, oder ein Schienenfahrzeug wie vorzugsweise ein Eisen- oder Straßenbahnwagen ist.

7. Verwendung einer Scheibe nach wenigstens einem der Ansprüche 1 bis 6, **dadurch gekennzeichnet, dass** die Scheibe als äußere Schutzscheibe in einem Scheibenverbund mit einer inneren Glasscheibe und optional weiteren Scheiben sowie mit mindestens einer, vorzugsweise polymeren, Zwischenschicht verwendet wird.
